# EUROPÄISCHE PATENTANMELDUNG

(11) **EP 1 113 652 A2**
(43) Veröffentlichungstag der Anmeldung: **04.07.2001**
(21) Anmeldenummer: 00127962.9
(22) Anmeldetag: 20.12.2000
(51) Int. Cl.: H04M 1/65, H04M 1/725

(54) **Wiederkehrende Gesprächsaufzeichnung**

(30) Priorität: 29.12.1999 DE 19963630
(71) Anmelder: Salabaschew, Atanas, 75196 Remchingen (DE)
(72) Erfinder: Salabaschew, Atanas, 75196 Remchingen (DE)
(74) Vertreter: COHAUSZ HANNIG DAWIDOWICZ & PARTNER

(57) **Zusammenfassung**

Die Erfindung betrifft ein Verfahren zur Aufzeichnung von Gesprächen und/oder von Gesprächsfragmenten während eines mit einem Mobiltelephon geführten Telephonates, wobei das Mobiltelephon eine zur Aufzeichnung geeignete Speichereinheit mit einem beschreibbaren Speicher aufweist, wobei der Speicher ein rollierender Speicher ist, der in Zyklen mit bestimmter Wiederkehr beschrieben wird und der Speicherinhalt nach einem Zyklus überschrieben wird.

## Beschreibung

Die Erfindung betrifft ein Verfahren zur Aufzeichnung von Gesprächen oder von Gesprächsfragmenten während eines mit einem Mobiltelephon geführten Telephonates, wobei das Mobiltelephon eine zur Aufzeichnung geeignete Speichereinheit mit einem beschreibbaren Speicher aufweist. Die Erfindung betrifft außerdem ein Mobiltelephon, das zur Durchführung des Verfahrens geeignet ist.

Es sind Mobiltelephone bekannt, die einen Speicher zur Aufzeichnung von Gesprächsfragmenten aufweisen. Dazu wird während des Gespräches die Aufzeichnung mittels eines Tastendruckes gestartet, wobei dann vermittels einer Speichereinheit, die einen Speicher sowie eine Schreib- und eine Leseeinheit aufweist, der entsprechende Speicher beschrieben wird. Die Größe der bislang bekannten Speicher reicht aus, um beispielsweise eine während des Gespräches mitgeteilte Telephonnummer zu speichern, die dann nach Beendigung des Telephonates abgehört werden kann. Es sind auch schon Speicher größerer Kapazität bekannt, in denen Gesprächsfragmente von einigen Minuten Dauer aufgezeichnet werden können.

Nachteilig an allen bekannten in Mobiltelephonen verwendeten Speichereinheiten ist jedoch die sehr begrenzte Kapazität. So macht es die Beschränkung der Kapazität erforderlich, die Aufzeichnung zu einem bestimmten Zeitpunkt zu starten, wobei dieser Zeitpunkt so gewählt werden muß, daß gerade die interessanten Teile des Gespräches aufgezeichnet werden können. Da sich dieser Zeitpunkt selten genau definieren läßt, fehlen bei der Aufzeichnung meist entscheidene Passagen des Gespräches. Wird die Aufzeichnung automatisch zu Beginn des Gespräches gestartet, so ist die Gefahr groß, daß die Kapazität des Speichers erschöpft ist, bevor die wichtigen Teile des Gespräches kommen. Speicher von größerer Kapazität, die ein Telephonat von etwa einer Stunde Dauer aufzeichnen könnten, sind wegen ihrer großen Ausmaße und ihrem hohen Stromverbrauches zum Einbau in Mobiltelephone nicht geeignet.

Aufgabe der vorliegenden Erfindung ist es daher, ein Verfahren zu schaffen, das trotz der bei Mobiltelephonen begrenzten Speicherkapazität eine sichere Aufzeichnung der gewünschten Gesprächsteile ermöglicht und das sich dabei mit einfachen technischen Mittels realisieren läßt. Gleichzeitig ist es die Aufgabe der Erfindung, ein Mobiltelephon zu schaffen, das zur Durchführung des Verfahrens geeignet ist.

Diese Aufgaben werden durch das Verfahren nach Anspruch 1 und das Mobiltelephon nach Anspruch 7 gelöst.

Die besonderen Vorteile des erfindungsgemäßen Verfahrens resultieren daraus, daß der Speicher ein sogenannter rollierender Speicher ist, mit dem das geführte Gespräch kontinuierlich aufgezeichnet wird, wobei der Speicher rollierend in Zyklen mit bestimmter Wiederkehr beschrieben wird. Dabei repräsentiert der Inhalt des Speichers den zeitlichen Verlauf eines Gesprächfragmentes mit Anfang und Ende, wobei der Speicherinhalt von Anfang an überschrieben wird, sobald das Ende des Speichers erreicht ist. Die Funktion eines solchen rollierenden Speichers läßt sich am einfachsten am Bild einer sich kontinuierlich drehenden Walze darstellen, deren Oberfläche nach einer vollständigen Umdrehung wieder erneut beschrieben wird. Es ist besonders vorteilhaft, daß ein rollierender Speicher immer den Teil des vorübergegangenen Gespräches enthält, der sich in einer Umdrehung speichern läßt. Dabei sei an dieser Stelle betont, daß die rollierende Funktion nicht durch eine tatsächliche Drehung eines Speichers realisiert werden muß, sondern auch elektronisch bewerkstelligt werden kann.

Der Vorteil des erfindungsgemäßen Verfahrens liegt auf der Hand. So lassen sich mit sehr geringer Speicherkapazität die entscheidenden Teile eines Gespräches aufzeichnen. Die erfindungsgemäße Methode ist dabei besonders kostengünstig und zuverlässig. Bei Anwendung des Verfahrens wird der Komfort des Mobiltelephones beträchtlich erhöht, so daß die Attraktivität des Gerätes entsprechend steigt. Bei Anwendung des erfindungsgemäßen Verfahrens steht dem Nutzer im Laufe eines jeden Gespräches jederzeit der Inhalt der unmittelbaren Vergangenheit über die Dauer eines ein Zeitfenster gewisser Größe definierenden Zyklus' zur Verfügung. Der rollierende Speicher, der vorteilhafterweise als flüchtiger Speicher ausgelegt ist, arbeitet dabei nach dem Prinzip eines aus der Luftfahrt bekannten Voice Recorders.

Besonders vorteilhaft ist es, wenn die Aufzeichnung des Gespräches in den rollierenden Speicher automatisch mit Beginn des Gespräches gestartet wird. Der Nutzer braucht sich dann um die Aufzeichnung zunächst nicht zu kümmern und kann dennoch sicher sein, daß keine Information verloren geht. Wegen des automatischen Starts kann auf weitere Bedienknöpfe verzichtet werden, was die Herstellungskosten des Mobiltelephons reduziert und den Bedienkomfort erhöht.

Dabei läßt sich das unmittelbare Einsetzen der Aufzeichnung mit Gesprächsaufnahme elektronisch einfach realisieren.

Um Gespräche über die Länge eines Zyklus hinaus speichern zu können, ist es vorteilhaft, dem rollierenden Speicher einen weiteren Speicher in Form eines Langzeitspeichers beizuordnen, in den der Inhalt des rollierenden Speichers übertragen werden kann und der fähig ist, Gespräche längerer Dauer aufzuzeichnen. So sieht die Erfindung in einer besonderen Ausführungsform vor, daß der Nutzer in dem Moment, in dem er denkt eine Aufzeichnung des Gespräches könne nun sinnvoll sein, mittels eines Befehles, beispielsweise mittels eines Tastendruckes, den gesamten Inhalt des rollierenden Speichers, oder die letzten 1, 2 oder 3 Minuten des Gespräches in den Langzeitspeicher kopiert, wobei es besonders vorteilhaft ist, wenn der Langzeitspeicher das dann folgende Gespräch aufzeichnet. Der Langzeitspeicher übernimmt damit die Aufzeichnung des Gespräches, wobei im Moment der Entscheidung für eine Aufzeichnung der davorliegende Teil des Gespräches gesichert wird.

Nach der Aufzeichnung ist es möglich, den Inhalt des Langzeitspeichers auszulesen. Dabei kann der Inhalt entweder abgehört werden oder in einer vorteilhaften Ausführungsform über eine Schnittstelle, beispielsweise eine Infrarot-Schnittstelle, auf einen externen Speicher kopiert werden. Als externe Speicher kommen Medien wie Magnetbänder oder optische Disks (CD's) oder PC's in Betracht.

Es ist auch möglich, den Langzeitspeicher als beschreibbaren Festkörperspeicher in Form einer Memory-Card so auszubilden, daß er lösbar in einen entsprechenden Einschub des Mobiltelephons einsteckbar ist. Eine solche Memory-Card kann dann nach belieben ausgetauscht werden. Es ist solchen Memory-Cards auch möglich, ein langes Gespräch auf mehrere nacheinander einzuschiebende Karten aufzuzeichnen, wobei die Übergänge durch Einsatz des rollierenden Speichers überbrückt werden können.

Der rollierende Speicher wird vorteilhafterweise als flüchtiger Halbleiterspeicher, beispielsweise in Form eines RAM s, ausgebildet. Als Kapazität des rollierenden Speichers bietet sich eine Größenordnung von etwas weniger als einem Megabyte an, so daß die aufgezeichneten Zyklen des Gespräches eine Dauer von wenigen Minuten aufweisen. Mit dieser Dauer kann ein sinnvoller Einsatz des rollierenden Speichers gewährleistet werden.

Vorteilhafterweise läßt sich dieses Verfahren wegen der niedrigen Kosten gegenüber den bekannten Lösungen in aufwendigen Geschäfts-Telephonen auch in Low-Cost-Telephonen für den privaten Gebrauch einsetzen.

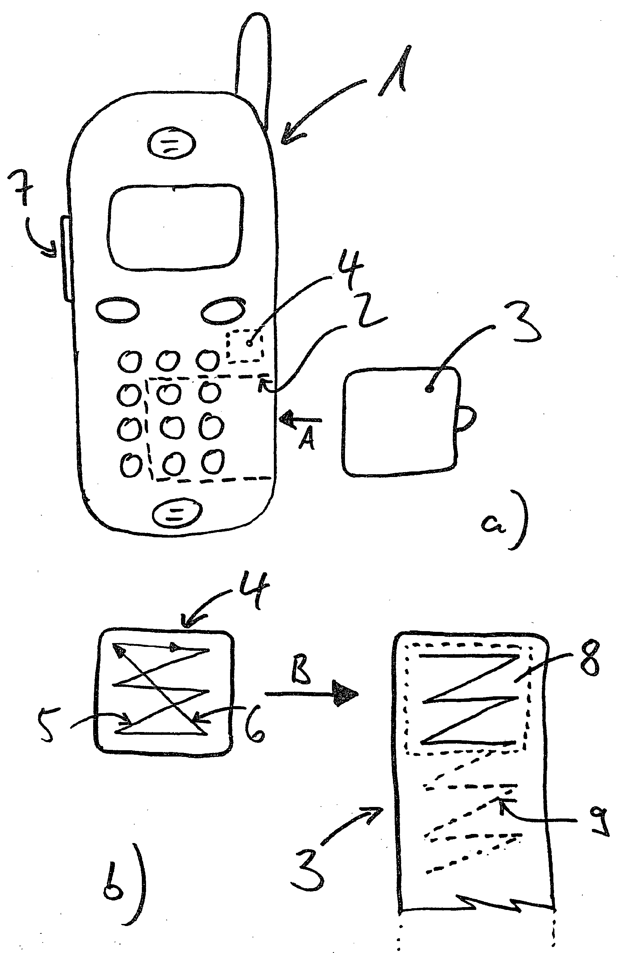

Ein Ausführungsbeispiel der Erfindung ist in der Figur dargestellt und wird im Folgenden näher beschrieben.

In Teil a) der Figur ist ein Mobiltelephon 1 der üblichen Art dargestellt. Dieses Mobiltelephon 1 weist ein Einschubfach 2 auf in das ein beschreibbarer kartenförmiger Festkörperspeicher 3 einschiebbar ist (Pfeil A). Im Mobiltelephon 1 selber ist ein beschreibbarer rollierender Speicher 4 ebenfalls in Form eines RAM-Chips angeordnet. Der rollierende Speicher 4 und der Festkörperspeicher 3 bilden zusammen mit dem dazugehörigen Schreib- und Lesemodul eine kompakte Speichereinheit, mit der in einer besonders vorteilhaften Ausführungsform ein Mobiltelephon ausgerüstet ist.

Anhand von Teil b) der Figur sei die Funktion des rollierenden Speichers 4 dargestellt. Dabei wird der Speicherplatz des rollierenden Speichers 4 entlang eines Zeitstrahles 5 zeilenweise mit dem laufenden Gespräch beschrieben, wobei der Zeitstrahl 5 bei Erreichen des Endes des Speicherplatzes vermittels einer diagonalen Ablenkung 6 an den Anfang zurückgesetzt wird. Durch den geschlosenen Zeitstrahl 5 wird ein Zyklus bestimmter Länge dargestellt. Nach Ablauf eines Zyklus wird der Speicher 4 mit einer Wiederkehr beschrieben, wobei der vorherige Speicherinhalt nach einem Zyklus überschrieben wird. Die Aufzeichnung des Gespräches auf dem rollierenden Speicher geschieht automatisch von Beginn des Gespräches an.

Der Nutzer es Mobiltelephones kann durch Druck auf eine Taste 7 die Speichereinheit veranlassen, den Inhalt 8 des rollierenden Speichers 4 auf den Festkörperspeicher 3 zu kopieren (Pfeil B). Nach Veranlassung des Kopiervorganges durch den Nutzer wird der anschließende Gesprächsverlauf 9 fortwährend in den Langzeitspeicher geschrieben. Der Inhalt des Langzeitspeichers kann zu einem späteren Zeitpunkt ausgelesen, insbesondere abgehört, werden.

In einem anderen Ausführungsbeispiel entspricht jeder Tastendruck einer zurückliegenden Minute. Wenn also der Benutzer die Taste drei Mal drückt, werden die letzten drei Gesprächsminuten in den nichtflüchtigen Speicher kopiert und anschließend der weitere Gesprächsverlauf permanent aufgezeichnet.

## Patentansprüche

1. Verfahren zur Aufzeichnung von Gesprächen und/oder von Gesprächsfragmenten während eines mit einem Mobiltelephon geführten Telephonates, wobei das Mobiltelephon eine zur Aufzeichnung geeignete Speichereinheit mit einem beschreibbaren Speicher aufweist,
**dadurch gekennzeichnet**,
daß der Speicher ein rollierender Speicher ist, der in Zyklen mit bestimmter Wiederkehr beschrieben wird, wobei der Speicherinhalt nach einem Zyklus überschrieben wird.

2. Verfahren nach Anspruch 1,
**dadurch gekennzeichnet**, daß die Aufzeichnung in den rollierenden Speicher mit Beginn des Gespräches automatisch gestartet wird.

3. Verfahren nach Anspruch 1 oder 2,
**dadurch gekennzeichnet**, daß der Inhalt oder ein Teil des Inhaltes des rollierenden Speichers auf Veranlassung des Nutzers, beispielsweise durch Tastendruck, in einen Langzeitspeicher geschrieben wird.

4. Verfahren nach Anspruch 3,
**dadurch gekennzeichnet**, daß nach der Veranlassung durch den Nutzer der anschließende Gesprächsverlauf in den Langzeitspeicher geschrieben wird.

5. Verfahren nach einem der vorherigen Ansprüche,
**dadurch gekennzeichnet**, daß der Inhalt des Langzeitspeichers ausgelesen, insbesondere abgehört, wird.

6. Verfahren nach einem der vorherigen Ansprüche,
**dadurch gekennzeichnet**, daß der Inhalt des Langzeitspeichers über eine Schnittstelle auf einen außerhalb des Mobiltelephones angeordneten externen Speicher übertragen wird.

7. Verfahren nach einem der vorherigen Ansprüche,
**dadurch gekennzeichnet,** daß rollierender Speicher und Langzeitspeicher in einer physikalischen Speichereinheit realisiert wird.

8. Mobiltelephon mit einer zur Aufzeichnung von Gesprächen oder von Gesprächsfragmenten einsetzbaren Speichereinheit,
**dadurch gekennzeichnet**,
daß die Speichereinheit ein Schreibmodul aufweist, das einen Speicher rollierend in Zyklen bestimmter Wiederkehr beschreibt.

9. Mobiltelephon nach Anspruch 8,
**dadurch gekennzeichnet**,
daß der rollierende Speicher ein Magnetspeicher ist.

10. Mobiltelephon nach Anspruch 9,
**dadurch gekennzeichnet**,
daß der rollierende Speicher ein Festkörperspeicher in Form eines beschreibbaren RAM ist.

11. Mobiltelephon nach einem der Ansprüche 8 bis 10,
**dadurch gekennzeichnet,** daß der rollierende Speicher eine Kapazität von weniger als einem Megabyte aufweist.

12. Mobiltelephon nach einem der Ansprüche 8 bis 11,
**dadurch gekennzeichnet**, daß die Zyklen eine Dauer von wenigen Minuten aufweisen.
